# EUROPEAN PATENT APPLICATION

(11) **EP 4 104 980 A2**
(43) Date of publication of application: **21.12.2022**
(21) Application number: 22179721.0
(22) Date of filing: 17.06.2022
(51) Int. Cl.: B25J 9/16

(54) **APPARATUS AND METHOD FOR CAPTURING IMAGE USING ROBOT**

(30) Priority: 18.06.2021 KR 20210079283; 11.05.2022 KR 20220057889
(71) Applicant: DOOSAN ROBOTICS INC, Gyeonggi-do 16648 (KR)
(72) Inventor: Park, Hee Bong, 04563 Seoul (KR); Park, Kyung Hwan, 04563 Seoul (KR)
(74) Representative: Petraz, Gilberto Luigi

(57) **Abstract**

Provided is a capturing apparatus. The capturing apparatus may include a setting unit configured to set environment information of a robot equipped with a camera; and a pattern unit configured to set a capturing pattern of the robot based on the environment information.

## Description

### BACKGROUND

### Field

Embodiments of the present disclosure relate to an apparatus and method for capturing an image using a robot.

### Description of the Related Art

Recently, the development of information technology (IT) technology and interest in robots are rapidly increasing, and robots that perform various functions are being developed in accordance with these results. In particular, a lot of robots capable of replacing the role of a human, which may repetitively perform tasks that are difficult for humans or simple tasks, are being developed, and examples of these robots include cleaning robots and transport robots. In addition, camera robots for capturing a video are appearing.

### SUMMARY

An aspect of the present disclosure provides an apparatus and method for capturing a subject while changing a capturing angle, a capturing position, and a view angle under a virtual environment in which a robot is included.

Another aspect of the present disclosure provides a capturing apparatus and capturing method for teaching a capturing pattern of a robot that captures a subject.

A capturing apparatus according to an aspect of the present disclosure may include a setting unit configured to set environment information of a robot equipped with a camera; and a pattern unit configured to set a capturing pattern of the robot based on the environment information.

The setting unit may set at least one of a type of the robot, a communication connection address of the robot, a type of a subject corresponding to a capturing target, a type of the camera, a position of the robot, a position of the camera, a position of the subject, a distance between the camera and the subject, and a view angle of the camera.

The setting unit may generate a virtual space in which the robot is disposed.

The setting unit may generate the subject that is the capturing target of the camera.

The setting unit may dispose the robot and the subject together in the virtual space.

The setting unit may set the capturing pattern of the robot based on the positions of the robot and the subject disposed in the virtual space.

The pattern unit may display a first menu, a second menu, and a third menu together on one screen of a display.

A first image, which is captured by the camera mounted on the robot or a projection capturing means in which the camera is projected in a virtual space, may be displayed on the first menu.

A second image, which includes the robot or a projection body in which the robot is projected in the virtual space, may be displayed on the second menu.

A setting menu for setting the capturing pattern may be displayed on the third menu.

The pattern unit may be provided with a generation part, an arrangement part, and a first display part.

The generation part may generate a virtual stage.

The arrangement part may dispose a projection capturing means on which the camera is projected on the virtual stage.

The arrangement part may dispose a virtual subject on the virtual stage according to the environment information.

The first display part may display a first menu on a display.

A first image in which the virtual stage or the subject is captured by the projection capturing means may be displayed on the first menu.

The pattern unit may be provided with a generation part, an arrangement part, and a second display part.

The generation part may generate a virtual stage and a virtual auxiliary capturing means that is distinguished from a projection capturing means on which the camera is projected.

The arrangement part may dispose a projection body on which the robot is projected on the virtual stage.

The arrangement part may dispose a virtual subject on the virtual stage according to the environment information.

The arrangement part may dispose the auxiliary capturing means at a position spaced apart from the projection capturing means, the projection body, and the subject.

The second display part may display a second menu on a display.

A second image in which at least one of the virtual stage, the subject, the projection body, and the projection capturing means is captured by the auxiliary capturing means may be displayed on the second menu.

The pattern unit may be provided with a pattern part configured to set a capturing pattern including at least one of a movement path of the camera, a via point upon movement, an orientation direction, and a view angle.

A control unit configured to move the robot or a simulation unit configured to simulate the movement of the robot may be provided.

The control unit may generate control information for setting the movement of the robot that executes the capturing pattern in a real world.

When a projection body corresponding to the robot projected in a virtual space is defined,

the simulation unit may generate simulation information for setting the movement of the projection body that executes the capturing pattern in the virtual space.

The pattern unit may display on a display a third menu in which a setting menu of the capturing pattern is displayed.

The setting menu may include at least one of a camera operation menu, a via point setting menu, a movement setting menu, a timeline menu, a reproduction menu, and a file management menu.

The camera operation menu may include a menu for adjusting an orientation direction or a view angle of the camera.

The via point setting menu may include a menu for setting a point through which the camera passes.

The movement setting menu may include a menu for setting a method in which the camera moves in a section between a plurality of via points.

The timeline menu may include a menu in which each via point is arranged over time.

The reproduction menu may move the robot according to the timeline menu or move a projection body of the robot projected in a virtual space.

The file management menu may include a menu for storing or loading at least one of the orientation direction, view angle, via point, and arrangement order of the via point of the camera set through the camera operation menu, the via point setting menu, the movement setting menu, and the timeline menu.

The pattern unit may be provided with a first display part configured to display a first menu on the display and a second display part configured to display a second menu on the display.

An image captured by the camera moving with the robot may be displayed or an image captured by a projection capturing means of the camera moving with the projection body may be displayed on the first menu when the robot or the projection body is moved by the reproduction menu.

An appearance of the robot or the projection body moved by the reproduction menu may be displayed on the second menu.

The pattern unit may be provided with a first display part and a pattern part, and the first display part may display on a display a first menu in which a first image captured by a projection capturing means in which the camera is projected in a virtual space or the camera is reproduced,

The pattern part may provide a camera operation menu for adjusting an orientation direction or view angle of the projection capturing means or the camera according to the user's operation targeting the first menu to the display.

The pattern unit may be provided with a pattern part configured to generate a via point setting menu.

The via point setting menu may set a point through which the camera passes.

The pattern part may provide a manual menu for allowing a user to teach the via point while holding and moving the robot by hand or a numerical menu for teaching the via point while numerically operating the movement of each joint forming the robot to a display.

The pattern unit may be provided with a pattern part configured to generate a movement setting menu.

The movement setting menu may include a menu for setting a method in which the camera moves.

The pattern part may provide a shortest menu for allowing the robot to move between via points at a shortest time, a linear menu for setting a time at which the robot linearly moves between the via points, and a stop time menu for setting a time at which the robot stays at a specific via point to a display.

The pattern unit may be provided with a pattern part configured to generate a timeline menu in which a via point of the robot is arranged over time.

In the timeline menu, a horizontal axis may be a time axis, and a vertical axis may be a via method axis.

The pattern part may form a specific via point so that the specific via point displayed on the timeline menu is movable along the time axis by a user's operation.

The pattern part may form the specific via point so that the specific via point displayed on the timeline menu is movable along the via method axis by a user's operation.

The via method axis may include a first method or a second method.

The first method may represent a method in which once the robot reaches the specific via point and then moves from the specific via point toward another via point.

The second method may represent a method in which the robot moving toward the specific via point changes the direction toward another via point before reaching the specific via point.

The pattern unit may be provided with a pattern part configured to generate a blending menu for setting a via method of the robot for a specific via point.

The pattern part may set a blending path when the blending menu is selected.

The blending path may include a movement path in which the robot, which moves from a previous via point toward the specific via point, changes a direction toward a next via point before reaching the specific via point.

When a first virtual line connecting the previous via point and the specific via point, and a second virtual point connecting the specific via point and the next via point are defined,

the pattern part may set the blending path along an arc of a virtual circle that comes into contact with the first virtual line and the second virtual line at the same time.

The pattern part may increase a radius of the virtual circle when a value input through the blending menu increases, and decrease the radius of the virtual circle when the value input through the blending menu decreases.

The pattern part may set the radius of the virtual circle with respect to a shorter virtual line of the first virtual line and the second virtual line.

The pattern part may form the virtual circle within a section from the specific via point to a half position of the shorter virtual line.

The pattern unit may be provided with a pattern part configured to generate a circle generation menu.

The circle generation menu may include a menu for setting a movement path of the robot moving along a virtual capturing circle formed around a subject corresponding to a capturing target.

The pattern part may generate a first additional point and a second additional point after the specific via point when the circle generation menu after the specific via point is selected.

The pattern part may additionally provide a menu for changing at least one position of the specific via point, the first additional point, and the second additional point.

The pattern part may form the capturing circle to pass through all of the specific via point, the first additional point, and the second additional point.

The pattern part may set a movement path of an arc shape that sequentially passes through the specific via point, the first additional point, and the second additional point of the capturing circle.

The pattern unit may further give an additional time to a movement time from the initial position to the initial via point when an initial via point passing through just after an initial position is set.

The additional time may include a maximum time at which the camera deviating from the initial position is required to return to the initial position by the robot within a robot's speed limit.

When a lighting robot configured to project light required for capturing a subject, and a reflective robot configured to reflect light projected from the lighting robot are provided,

the pattern unit may additionally control at least one of the lighting robot and the reflective robot in conjunction with a capturing robot equipped with the camera.

A projection lighting body in which the lighting robot is projected in a virtual space, and a projection lighting lamp in which the lighting lamp is projected in the virtual space may be displayed on the second menu by the pattern unit.

A projection reflection body in which the reflective robot is projected in the virtual space, and a projection reflector in which the reflector is projected in the virtual space may be displayed on the second menu by the pattern unit.

The pattern unit may be provided with a pattern part configured to set a via point displayed on the display.

The via point set by the pattern part may include at least one of a coordinate of the via point through which the capturing robot equipped with the camera or the camera is required to pass, orientation direction information of the camera, view angle information of the camera, and arrangement order information of the via point.

The via point set by the pattern part may include at least one of coordinate information of the lighting lamp, orientation direction information of the lighting lamp, and an illuminance of the lighting lamp.

The via point set by the pattern part may include at least one of coordinate information of the reflector, and an arrangement angle of the reflector.

The pattern part may display a camera operation menu for adjusting the orientation direction or view angle of the camera, and a via point setting menu for setting a coordinate through which the camera passes on the display.

In a state in which a specific via point is selected, at least one of the orientation direction, view angle, and coordinate through which the camera passes of the camera set through the camera operation menu and the via point setting menu may be included in information of the corresponding specific via point.

The pattern part may display a lighting lamp menu for setting at least one of the coordinate information of the lighting lamp, the orientation direction information of the lighting lamp, and the illuminance of the lighting lamp on the display.

In the state in which the specific via point is selected, the coordinate information of the lighting lamp, the orientation direction information of the lighting lamp, and the illuminance of the lighting lamp set through the lighting lamp menu may be included in the information of the corresponding specific via point.

The pattern part may display a reflective menu for setting at least one of the coordinate information of the reflector and the arrangement angle of the reflector on the display.

In the state in which the specific via point is selected, the coordinate information of the reflector and the arrangement angle of the reflector set through the reflector menu may be included in the information of the corresponding specific via point.

The capturing robot may be provided with an illuminance sensor configured to measure ambient brightness.

The pattern unit may be provided with a pattern part configured to obtain a measurement value of the illuminance sensor.

The pattern part may turn on a pre-provided lighting lamp and move the lighting lamp to a preset position using a pre-provided lighting robot when the measurement value of the illuminance sensor is a set illuminance or less.

A capturing method according to the present disclosure may include a setting operation of setting at least one of a type of a robot moving a camera, a communication connection address of the robot, a type of a subject corresponding to a capturing target, a type of the camera, a position of the robot, a position of the camera, a position of the subject, a distance between the camera and the subject, and a view angle of the camera; a pattern operation of setting a capturing pattern of the camera installed on the moving robot; and an execution operation of moving the robot according to the capturing pattern or simulating the movement of the robot according to the capturing pattern.

According to the capturing apparatus and the capturing method the present disclosure, it is possible to provide the environment in which the subject can be captured while variously changing the capturing angle, the capturing position, and the view angle under the virtual environment in which the capturing robot is included.

In addition, according to the capturing apparatus and the capturing method of the present disclosure, it is possible to provide the environment in which the capturing pattern of the robot that captures the subject can be easily taught.

### BRIEF DESCRIPTION OF THE DRAWINGS

The above and other aspects will become more apparent from the following description of the exemplary embodiments with reference to the accompanying drawings, in which:
FIG. 1 is a schematic view showing a capturing apparatus according to the present disclosure;
FIG. 2 is a block view showing a pattern unit;
FIG. 3 is a schematic view showing an initial screen displayed on a display by the capturing apparatus;
FIG. 4 is a schematic view showing a state in which various environment information is set by a setting unit;
FIG. 5 is a schematic view showing a state in which a first menu, a second menu, and a third menu are displayed by the pattern unit;
FIG. 6 is a schematic view showing various menus included in the third menu;
FIG. 7 is a schematic view showing a state in which a manual menu is selected;
FIG. 8 is a schematic view showing a first method;
FIG. 9 is a schematic view showing a second method;
FIG. 10 is a schematic view showing a limitation of the second method;
FIG. 11 is a schematic view showing a method of setting an initial point considering a return time of a robot;
FIG. 12 is a schematic view showing another robot controlled by the capturing apparatus according to the present disclosure;
FIG. 13 is a schematic view showing a lighting menu and a reflector menu;
FIG. 14 is a flowchart showing the capturing method according to the present disclosure; and
FIG. 15 is a view showing a computing apparatus according to an embodiment of the present disclosure.

### DETAILED DESCRIPTION

Hereinafter, embodiments of the present disclosure will be described in detail with reference to the accompanying drawings so that those skilled in the art to which the present disclosure pertains may easily practice the embodiments. However, the present disclosure may be implemented in several different forms, and is not limited to the embodiments described herein. In addition, in order to clearly describe the present disclosure in the drawings, parts irrelevant to the description are omitted, and similar parts are denoted by similar reference numerals throughout the specification.

In this specification, overlapping descriptions of the same components will be omitted.

In addition, in this specification, it should be understood that when a component is 'connected' or 'coupled' to another component, it may be directly connected or coupled to another component, but other components may also exist therebetween. On the other hand, in this specification, it should be understood that when a component is 'directly connected' or 'directly coupled' to another component, other components do not exist therebetween.

In addition, the terms used herein are used only to describe specific embodiments, and are not intended to limit the present disclosure.

In addition, in this specification, the singular expression may include the plural expression unless the context clearly dictates otherwise.

In addition, in this specification, it should be understood that terms such as 'include' or 'have' are only intended to specify that the features, numbers, steps, operations, components, parts, or combinations thereof described in the specification exist, and do not preclude the presence or addition possibility of one or more other features, numbers, steps, operations, components, parts, or combinations thereof in advance.

In addition, in this specification, the term 'and/or' includes a combination of a plurality of listed items or any of the plurality of listed items. In this specification, 'A or B' may include 'A', 'B', or 'both A and B'.

In addition, in this specification, detailed descriptions of well-known functions and configurations that may obscure the gist of the present disclosure will be omitted.

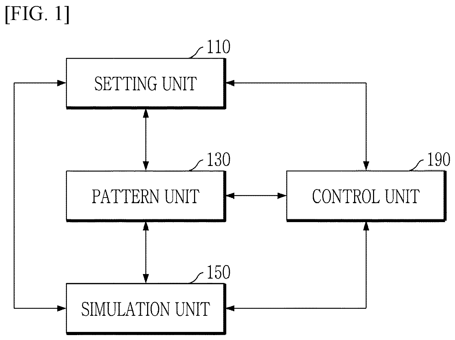

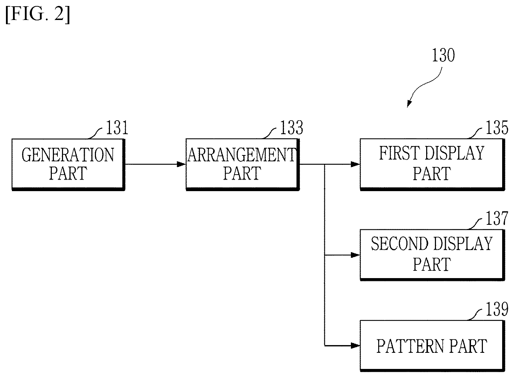

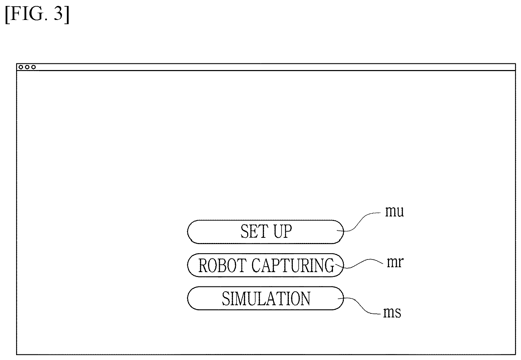

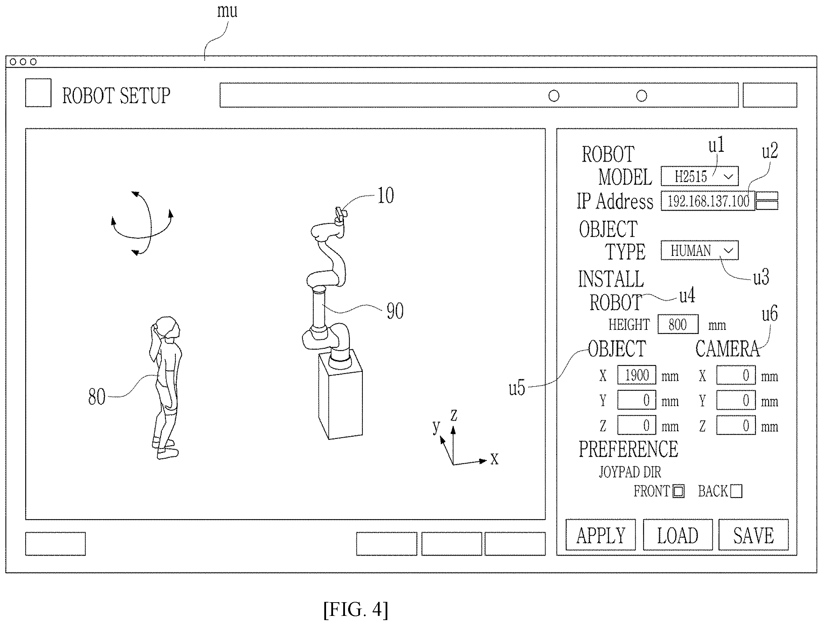

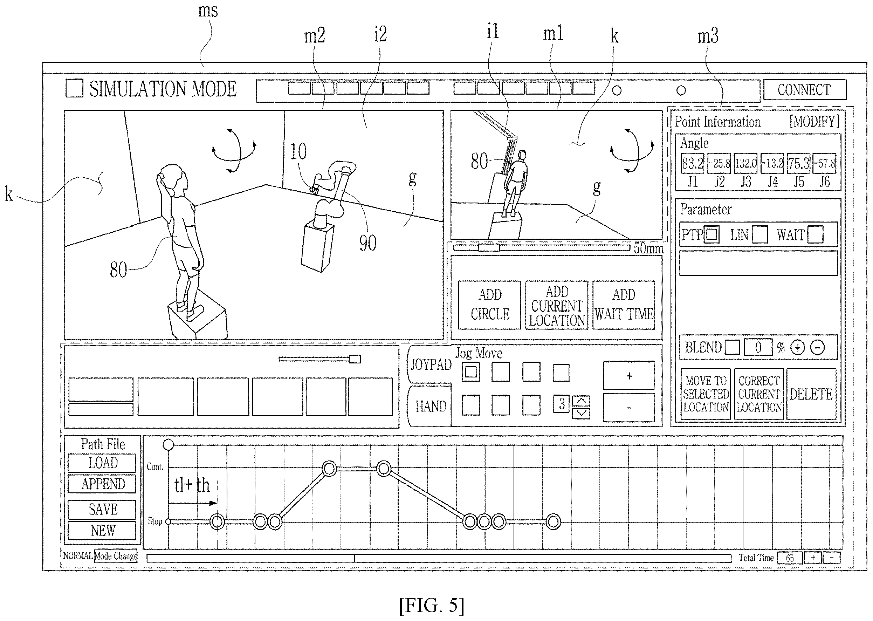

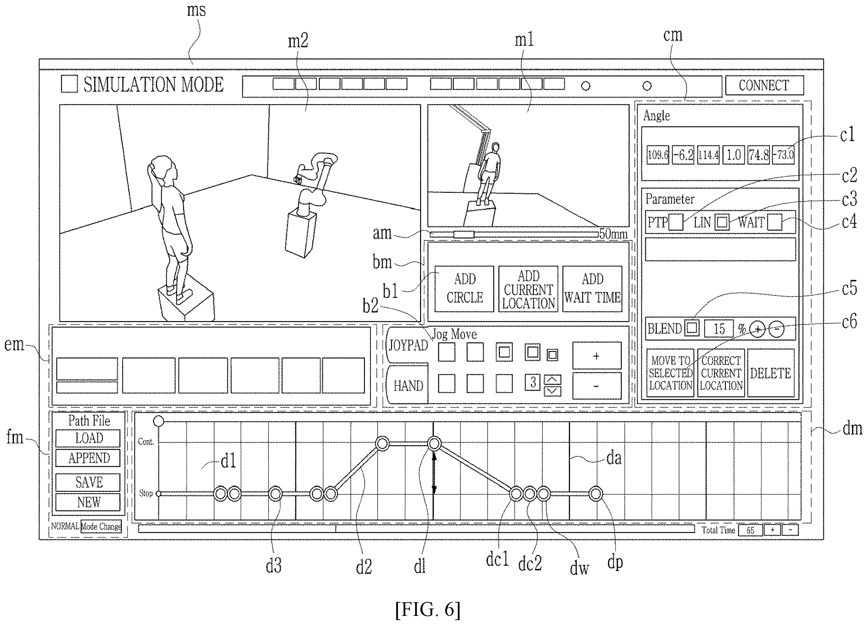

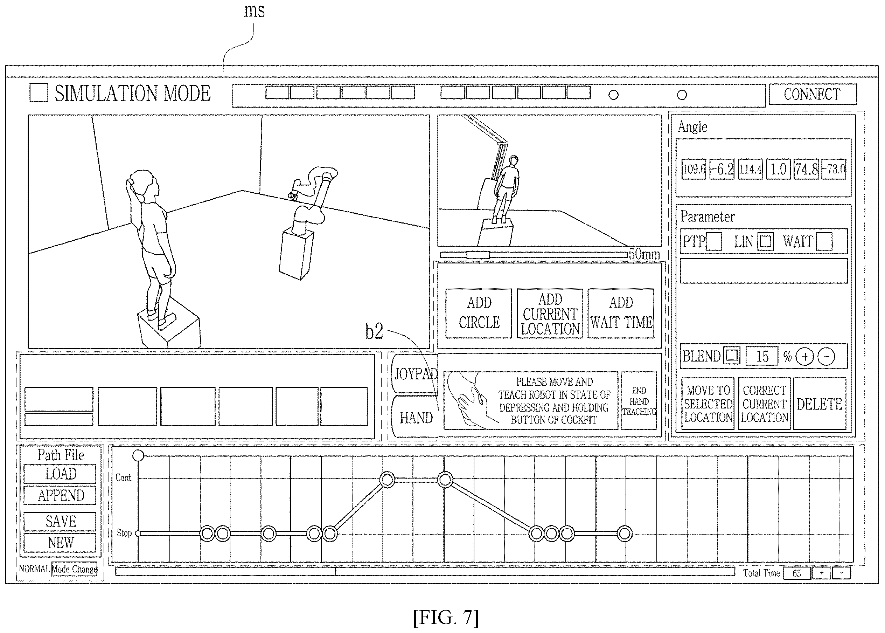

FIG. 1 is a schematic view showing a capturing apparatus according to the present disclosure. FIG. 2 is a block view showing a pattern unit 130. FIG. 3 is a schematic view showing an initial screen displayed on a display by the capturing apparatus. FIG. 4 is a schematic view showing a state in which various environment information is set by a setting unit 110. FIG. 5 is a schematic view showing a state in which a first menu, a second menu, and a third menu are displayed by the pattern unit 130. FIG. 6 is a schematic view showing various menus included in the third menu. FIG. 7 is a schematic view showing a state in which a manual menu is selected.

A capturing apparatus may be installed in a controller configured to control a robot, a management device configured to set various parameters of the robot or monitor an operation of the robot. Alternatively, the capturing apparatus may be installed in a management server configured to remotely manage the robot. Alternatively, the capturing apparatus may be installed in a separate terminal or server configured to display or operate a projection body 90 on which the robot is projected in a virtual space. Various menus in FIGS. 3 to 7 may be displayed through a display provided in the controller, the management device, the management server, a separate terminal, or the separate server.

The capturing apparatus may be mounted on various devices in the form of software. The capturing apparatus may display an initial selection menu through the display when being initially driven. As shown in FIG. 3, the initial selection menu may include a setting entry menu mu, a robot capturing menu mr, and a simulation menu ms.

The capturing apparatus shown in FIG. 1 may include a setting unit 110, a pattern unit 130, a control unit 190, and a simulation unit 150.

When the setting entry menu mu is selected from the initial selection menu, the setting unit 110 may be operated. When the robot capturing menu mr is selected from the initial selection menu, the pattern unit 130 and the control unit 190 may be operated. When the simulation menu ms is selected from the initial selection menu, the pattern unit 130 and the simulation unit 150 may be operated.

As shown in FIG. 4, the setting unit 110 may set environment information of the robot equipped with a camera.

The setting unit 110 may set at least one of a type of a robot u1, a communication connection address of the robot u2, a type of a subject 80 u3 corresponding to a capturing target, a type of the camera, a position of the robot u4, a position of the camera u6, a position of the subject 80 u5, a distance between the camera and the subject 80, and a view angle of the camera. At this time, the type of the robot, the communication connection address of the robot, the type of the subject 80 corresponding to the capturing target, the type of the camera, the position of the robot, the position of the camera, the position of the subject 80, the distance between the camera and the subject 80, and the view angle of the camera may correspond to the environment information.

The setting unit 110 may generate a virtual space k in which the robot is disposed. The virtual space k in which the robot is disposed may include a three-dimensional space formed by three orthogonal coordinate axes, for example, an x-axis, a y-axis, and a z-axis.

The setting unit 110 may generate the subject 80 that is the capturing target of the camera mounted on the robot. The subject 80 generated by the setting unit 110 may include persons, animals, and things. The subject 80 is an element disposed in the virtual space k, and may be selectively formed by a user. The subject 80 may include a virtual object other than a real object.

The setting unit 110 may dispose the robot and the subject 80 together in the virtual space k. As an example, the setting unit 110 may implement a mixed reality in which the real world and the virtual space k coexist, and dispose a robot of the real world in the virtual space k. As another example, the setting unit 110 may dispose the virtual projection body 90 in which the real robot of the real world is projected in the virtual space k as it is along with the subject 80.

The setting unit 110 may set the capturing pattern of the robot based on the positions of the robot and the subject 80, which are disposed in the virtual space k. The robot may capture the subject 80 disposed to be spaced apart from the robot using the camera moved by itself. In order to capture the subject 80 using the camera, the robot needs to know the position of the camera and the position of the subject 80.

The setting unit 110 may display an image including the robot and the subject 80, which are disposed in the virtual space k, on the display. The corresponding image may be formed to have the degree of freedom of movement along the x-axis, the y-axis, and the z-axis, or formed to have the degree of freedom of rotation around the x-axis, the y-axis, and the z-axis.

FIGS. 5, 6, and 7 may include a simulation mode menu on which the simulation menu ms is selected from the initial selection menu and then displayed on the display. The corresponding simulation mode menu does not control the robot in real time, but may be used to set the capturing patterns of the robot and the camera while moving the robot's projection body 90 in virtual space k under the involvement of the simulation unit.

When the robot capturing menu mr is selected from the initial selection menu, the robot capturing mode menu that is substantially the same as those of FIGS. 5, 6, and 7 may be displayed on the display. At this time, the robot capturing mode menu may be the same as the simulation mode menu except that a 'SIMUALATION MODE' representing a simulation state is changed to a 'ROBOT CAPTURING MODE' representing a real-time robot control state at the top left. Various operations performed for the robot capturing mode menu that appears after the robot capturing menu mr is selected may control the robot in real time.

The simulation unit and the control unit may be linked with the pattern unit 130.

The pattern unit 130 may set the capturing pattern of the robot based on the environment information. The simulation unit or the control unit may be operated according to the capturing pattern set by the pattern unit 130. An operation result of the simulation unit or an operation result of the control unit may include images captured by the camera mounted on the robot. When the camera that is capturing video or the robot is moved according to a specific capturing pattern, a reproducible captured image may be acquired for a set time.

The capturing pattern may include at least one of a position of the camera with respect to the subject 80, a view angle of the camera capturing the subject 80, a movement direction of the camera, a movement speed, a change in the position of the camera over time, and a change in the view angle of the camera over time.

The control unit may move the real robot in real time based on the capturing pattern. The simulation unit may simulate the movement of the robot based on the capturing pattern.

In other words, the control unit may generate control information for setting the movement of the robot that executes the capturing pattern in the real world.

The simulation unit may generate simulation information for setting or teaching the movement of the projection body 90 that executes the capturing pattern in the virtual space k.

The pattern unit 130 may provide a setting menu or a teaching menu to the user through a visual display method such as displaying on the display. In other words, the pattern unit 130 may display the setting menu for setting the movement path of the robot on the display facing the user or the teaching menu for teaching the robot the movement path of the robot on the display.

For example, the pattern unit 130 may display a first menu m1, a second menu m2, and a third menu m3 together on one screen of the display.

A first image i1 captured by the camera mounted on the robot or captured by the projection capturing means 10 in which the camera is projected in the virtual space k may be displayed on the first menu m1. In other words, the first image i1 may be an image captured by a real camera in the real world or an image captured by the virtual projection capturing means 10 projected by the corresponding camera in the virtual space k. Since it is difficult to acquire the image of the real camera when the first menu m1 exists under a simulation mode, the first image i1 may be limited to the image captured by the projection capturing means 10.

A second image i2 may be displayed on the second menu m2. The second image i2 may include the real robot in the real world or the projection body 90 in which the corresponding real robot is projected in the virtual space k. In order to display the robot moving in the virtual space k at various angles and various positions, it is preferable that a target included in the second image i2 is the projection body 90 of the virtual space k.

The setting menu for setting the capturing pattern may be displayed on the third menu m3.

The user may set or teach the movement path of the robot or the camera using the setting menu while viewing the first image i1 displayed on the first menu m1 and the second image i2 displayed on the second menu m2.

The pattern unit 130 shown in FIG. 2 may be provided with a generation part 131, an arrangement part 133, a first display part 135, a second display part 137, and a pattern part 139.

The generation part 131 may generate a virtual stage g. The virtual space k formed by the setting unit 110 may correspond to the concept of a simple workshop without a stage, props, or background related to capturing. This is because the stage, the props, and the background may be variously changed according to the capturing situation, and changed every moment by the user even during capturing. Accordingly, the virtual stage g on which the props, background, stage, etc. selected by the user are three-dimensionally and visually displayed is preferably generated by the generation part 131 of the pattern unit 130 so that the user may freely arrange various props in the virtual space k.

The arrangement part 133 may arrange the projection capturing means 10 on which the camera is projected on the virtual stage g. In addition, the arrangement part 133 may arrange the virtual subject 80 on the virtual stage according to the environment information.

At this time, the first image i1 in which the virtual stage g or the subject 80 is captured by the projection capturing means 10 may be displayed on the first menu displayed on the display by the first display part 135.

The generation part 131 may generate the virtual stage g, and generate a virtual auxiliary capturing means that is distinguished from the projection capturing means 10 on which the camera is projected.

The arrangement part 133 may arrange the projection body 90 on which the robot is projected on the virtual stage g. The arrangement part 133 may arrange the virtual subject 80 on the virtual stage g according to the environment information. The arrangement part 133 may arrange the virtual auxiliary capturing unit at a position spaced apart from the projection capturing unit 10, the projection body 90, and the subject 80.

The second image i2 in which at least one of the virtual stage g, the virtual subject 80, the projection body 90 of the robot, and the projection capturing unit 10 is captured by the auxiliary capturing means may be displayed on the second menu displayed on the display by the second display part 137.

The pattern part 139 may set a capturing pattern including at least one of a movement path, via point upon movement, orientation direction, and view angle of the camera.

The setting menu displayed on the third menu m3 by the pattern unit 130 may include at least one of a camera operation menu am, a via point setting menu bm, a movement setting menu cm, a timeline menu dm, a reproduction menu em, and a file management menu fm.

The camera operation menu am may include a menu for adjusting the orientation direction or view angle of the camera (including the projection capturing means 10).

The via point setting menu bm may include a menu for setting a point through which the camera passes, that is, a via point.

The movement setting menu cm may include a menu for setting a method in which the camera moves in a section between a plurality of via points.

The timeline menu dm may include a menu in which each via point is graphically arranged over time.

The reproduction menu em may include a menu for moving the robot according to the timeline menu or moving the projection body 90 of the robot projected in the space.

The file management menu fm may include a menu for storing or loading at least one of the orientation direction, view angle, via point, and arrangement order of the via point of the camera set through the camera operation menu am, the via point setting menu bm, the movement setting menu cm, and the timeline menu dm.

For example, the file management menu fm may be provided with a save menu 'SAVE', a load menu 'LOAD', an attachment menu 'APPEND', and a new menu 'NEW'.

When the save menu, 'SAVE' is selected, the pattern part 139 may store a path file, which is being currently generated, in a storage.

The path file may include at least one of the orientation direction, view angle, via point, and arrangement order of the via point of the camera set through the camera operation menu, the via point setting menu, the movement setting menu, and the timeline menu.

The storage may be provided in at least one of the controller, the management device, the management server, the separate terminal, the separate server, and mobile/website platforms.

The path file stored in the storage may be provided to or shared with other terminals according to a user's selection. The management device may be provided with a request part configured to ask the storage in return as a condition of the use of a path file shared through the mobile/website platforms or the like. Alternatively, when the path files shared with each other through the mobile/website platforms exist, a participation unit capable of participating in a community related to the path files shared with each other may be additionally provided in the management device.

When the load menu, 'LOAD' is selected, the pattern part 139 may load the path files stored in the storages of various devices to display the path files on the display. When the load menu is selected, a first path file previously displayed on the display may be replaced with a newly loaded second path file. After the replacement, the first path file disappears from the display, and only the second path file may be displayed.

When the attachment menu 'APPEND' is selected, the pattern part 139 may load the second path files stored in the storages of various devices, and attach the second path file to the back of the first path file already displayed on the display. In this case, the first path file and the second path file may be sequentially displayed on the display over time.

The pattern part 139 may generate a new path file when the new menu 'NEW' is selected by the user. In this case, the previously working path file is removed from the display, and a new path file may be displayed. When the robot or the projection body 90 is moved by the reproduction menu em, the image captured by the camera moving along with the robot may be displayed and reproduced on the first menu m1. Alternatively, the image captured by the projection capturing means 10 moving along with the projection body 90 may be displayed and reproduced on the first menu m1.

The appearance of the robot or the projection body 90 moved by the reproduction menu em may be displayed or reproduced on the second menu m2.

The pattern part 139 may provide the camera operation menu am to the display. The camera operation menu am may adjust the orientation direction or view angle of the projection capturing means 10 or the camera according to the user's operation targeting the first menu m1.

For example, at least a part of the camera operation menu am may be integrally formed with the first menu m1.

The camera operation menu am may include an operation menu overlapping the first menu m1, and the corresponding operation menu may be operated similarly to a general touch screen.

For example, when the user moves the mouse button in all directions while depressing and holding a mouse button in a state in which a pointer such as a mouse cursor is disposed on the first image i1 displayed on the first menu m1, the orientation direction of the camera may be changed in all directions.

The camera operation menu am may include a view angle operation menu in the form of a linear graph. When using the view angle operation menu, the user may adjust a capturing magnification of the projection capturing means 10 or the camera.

The via point setting menu bm generated by the pattern part 139 may set a point through which the camera passes.

The via point setting menu bm may be provided with an additional menu b1 for adding various points such as a via point and a coordinate menu b2 for setting the coordinate of each point.

The addition menu b1 may be provided with a circle generation menu 'Add CIRCLE' for generating a circle, a point addition menu 'Add current position' for setting a via point at the current position, and a stop addition menu 'Add WAIT TIME' for setting the time at which the robot or the camera stays at the current position.

The coordinate menu b2 may include a manual menu for allowing the user to teach the via point while holding and moving the robot by hand, and a numerical menu for teaching the via point while numerically operating the movement of each joint forming the robot.

The pattern part 139 may provide the manual menu linked to a 'HAND' shown in FIG. 7 or the numerical menu linked to a 'JOYPAD' shown in FIG. 6 to the display according to the user's selection.

The movement setting menu cm generated by the pattern part 139 may include a menu for setting a method in which the camera moves. The movement setting menu cm may include a display menu c1 for displaying rotation angles, positions, etc. of each joint j1, j2, j3, j4, j5, and j6 forming an arm of the robot that moves the camera.

The pattern part 139 may provide the display with a shortest menu c2 'PTP' in which the robot or the camera moves between the via points in the shortest time, a linear menu c3 'LIN' in which the robot or the camera linearly moves between the via points, and a stop time menu c4 'WAIT' for setting the time at which the robot or the camera stays at a specific via point. The shortest menu c2, the linear menu c3, and the stop time menu c4 may be included in the movement setting menu cm.

The shortest time required to move from the first position to the second position may be reduced as a distance between the two positions is reduced. However, the arm of the robot that has a plurality of joints and moves in such a way that the next joint rotates based on the previous joint may be different from this. In other words, when the robot moves along a different path other than the linear path crossing the first position and the second position, the time at which the camera is moved from the first position to the second position may be maximally shortened. As described above, a menu for instructing the robot to select a movement path capable of maximally shortening the movement time of the camera from the first position to the second position may correspond to the shortest menu c2. When the point add menu of the via point setting menu bm is selected in a state in which the shortest menu c2 is selected, the via point of the current position may be displayed as 'p' indicating the shortest menu c2. With respect to the via point 'p', which is set to move in the shortest time, the control unit or the simulation unit may select a path capable of moving from the just previous via point to the via point 'p' in the shortest time. It should be noted that the shortest menu c2 does not increase the rotational speed of the joint, but selects the path in which the shortest time is implemented.

The linear menu c2 may ask the robot to linearly move the camera without considering the movement time. For the via point 'L' added in a state in which the linear menu c2 is selected, the control unit or the simulation unit may be asked so that the camera moves along the linear path crossing the two points from the just previous via point to the via point 'L'.

The stop time menu c4 may be activated only when the stop addition menu, 'Add WAIT TIME' is selected from the via point setting menu bm. Here, the 'activation' may indicate whether selection is possible. When the stop addition menu, 'Add WAIT TIME' is selected, the stop time menu c4 may be changed from a non-selectable state to a selectable state. When the stop time menu c4 is changed from the non-selectable state to the selectable state, the stop time menu c4 may be expressed as being activated.

The stop time menu c4 may include a menu capable of numerically inputting a stop time. The time may be input into the corresponding menu in seconds.

The pattern part 139 may generate the timeline menu dm in which the via points of the robot are arranged over time. In the timeline menu, a horizontal axis may be a time axis, and a vertical axis may be a via method axis.

The pattern part 139 may form a specific via point so that the specific via point displayed on the timeline menu dm is movable along the time axis or the via method axis by the user's operation.

The timeline menu dm may be provided with an indicating line da that may be moved along the time axis by the user. When the stop addition menu, 'Add WAIT TIME' is selected in a state in which the indicating line da is disposed after the specific via point, a point 'W' representing a stop time may be displayed on the display. When a specific time is input through the stop time menu c4, the simulation unit or the control unit may be required to allow the camera (including the projection capturing means 10) or the robot (including the projection body 90) to stay for the specific time at a specific via point located just before the point 'W'.

The movement setting menu cm may be provided with a forced movement menu c6, 'Move to the selected position' for asking the control unit or the simulation unit to move the robot from the current position to the position of the indicating line da. In addition, the movement setting menu cm may be additionally provided with a correction menu 'Correct current position' for correcting the position of the point selected by the user, and a deletion menu, 'DELETE' for deleting the position selected by the user.

The via method axis corresponding to the vertical axis of the timeline menu dm may include a first method 'Stop' and a second method 'Cont.'.

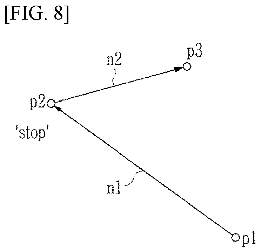

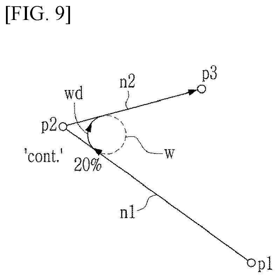

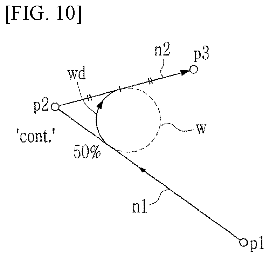

FIG. 8 is a schematic view showing the first method, and FIG. 9 is a schematic view showing the second method. FIG. 10 is a schematic view showing a limitation of the second method.

The first method 'Stop' may represent a method in which the robot once reaches the specific via point and then moves from the specific via point to another via point.

For example, three via points through which the robot or the camera should pass in order are assumed as a first point p1, a second point p2, and a third point p3.

When the second point p2 is set to the first method 'Stop', the robot or camera starting from the first point p1 may move to the second point p2 as the end point, and reach the second point p2. The robot reaching the second point p2 may move from the second point P2 as the starting point toward the third point p3 again.

According to the first method, the distal end of the camera or the robot may necessarily pass through each via point. However, since the camera or the robot perform the direction change by each method, a case unsuitable for the capturing environment may occur. In this case, a direction change of a smoothly curved shape other than the direction change of an angled shape may be required.

The second method 'Cont.' may represent a method in which the robot or camera moving toward the specific via point changes the movement direction toward another via point before reaching the specific via point. According to the second method, the direction change of the curved shape may be performed.

The direction change of the curved shape may be performed by various methods. A method may be provided to promote a smooth change of the captured image that minimizes the movement load of the robot.

The pattern part 139 may generate a blending menu c5 for setting a via method of the robot with respect to the specific via point. The blending menu c5 may be provided on the movement setting menu cm.

When the blending menu c5 is selected, the pattern part 139 may set a blending path wd. When the blending menu c5 is not selected, angled type of path in which the robot or the camera should necessarily pass through the specific via point other than the blending path wd may be set.

Instead of the separate blending menu c5, the blending path wd or angled type of path may also be selected through the operation of the timeline menu dm.

The timeline menu dm may be provided with a two-dimensional plane d1 having a horizontal axis and a vertical axis. A time line segment d2 representing the before and after relationships in time and a via point d3 sequentially arranged along the time line segment d2 may be added to the timeline menu dm. The via point d3 may include a shortest point 'dp' set by the shortest menu c2, a linear point 'dl' set by the linear menu c3, and a stop time point 'W' set by the stop time menu c4.

In the two-dimensional plane d1, the vertical axis may represent a via method axis. The via method axis may be provided with the first method 'Stop' and the second method 'Cont.' to be distinguished from each other. The user may select the specific via point and then change the vertical position of the specific via point between the first method and the second method through a drag method or the like. When the point disposed at a position of the first method is moved to a position of the second method, the blending path wd may be set for the corresponding point. When the point disposed at the second method position is moved to the first method position, angled type of path in which the robot or the camera should necessarily pass through the corresponding point may be set.

The blending path wd may include a movement path in which the robot moving from the previous via point p1 toward the specific via point p2 changes the direction toward the next via point p3 before reaching the specific via point p2.

When the blending menu c5 is selected for the specific via point p2, a first virtual line n1 connecting the previous via point p1 and the specific via point p2 and a second virtual line n2 connecting the specific via point p2 and the next via point p3 may be defined or assumed.

At this time, the pattern part 139 may set the blending path wd along the arc of the virtual circle w that comes into contact with the first virtual line n1 and the second virtual line n2 at the same time.

The pattern part 139 may increase a radius of the virtual circle w when a value input through the blending menu c5 increases, and decrease the radius of the virtual circle w when the value input through the blending menu c5 decreases. For example, the blending value in FIG. 9 may be set to 20%, and the blending value in FIG. 10 may be set to 50%. FIGS. 9 and 10 clearly show that the radius of the virtual circle when the blending value is 50% is larger than the radius of the virtual circle when the blending value is 20%.

As the radius of the virtual circle w increases, the blending path wd may move away from the specific via point p2. When the blending path wd is too far from the specific via point p2, in fact, the specific via point p2 may lose the meaning of a 'via point' through which the robot or the camera should pass.

The blending path wd formed by the blending process of the specific via point p2 does not substantially pass through the specific via point p2. At this time, the pattern part 139 may set the radius of the virtual circle W with respect to a shorter virtual line (the second virtual line n2 in FIG. 10) among the first virtual line n1 and the second virtual line n2 so that the specific via point p2 may maintain the minimum 'via point' function. In addition, the pattern part 139 may form the virtual circle w within a section from the specific via point p2 to a half position of the shorter virtual line. According to this embodiment, the virtual circle w that comes into contact with the section from the half point of the shorter virtual line to the specific via point P2 may be generated, and the blending path wd may be formed along the arc of the corresponding virtual circle w close to the specific via point p2. The corresponding blending path wd may be in a state of being closer to the specific via point than the half point of the shorter virtual line.

Due to this limitation, even when the user inputs the blending value greater than 50% through the blending menu, an upper limit value may be limited to an upper limit value selected from 50% or less.

According to the environment in which the subject 80 is captured, the pattern part 139 may generate the circle creation menu 'Add CIRCLE'. As described above, the circle generation menu 'Add CIRCLE' may be included in the via point setting menu bm.

The circle generation menu may include a menu for setting the movement path of the robot that moves along a virtual capturing circle formed around the subject 80 corresponding to the capturing target.

For example, when the circle generation menu is selected after the specific via point, the pattern part 139 may generate a first additional point dc1 and a second additional point dc2 after the specific via point d3.

The pattern part 139 may additionally provide (display on the display) a menu for changing the position of at least one of the specific via point, the first additional point dc1, and the second additional point dc2.

The pattern part 139 may form a capturing circle to pass through all of the specific via point, the first additional point dc1, and the second additional point dc2.

The pattern part 139 may set the movement path of the arc shape of the capturing circle sequentially passing through the specific passing point, the first additional point, and the second additional point.

According to this embodiment, a capturing pattern for capturing the subject 80 while circularly moving around the subject 80 may be easily set.

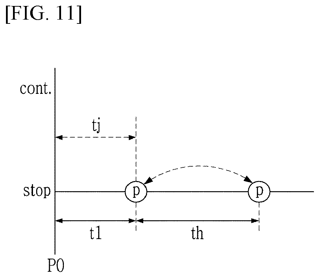

FIG. 11 is a schematic view showing a method of setting an initial point considering a return time of a robot.

A leftmost via point on the two-dimensional plane d1 of the timeline menu dm may mean a first via point through which the robot or camera at an initial position p0 should first pass. The user may set the first via point based on the state in which the robot is disposed at the initial position p0 as described above. At this time, the user may want the camera or robot at the initial position p0 to move for a first time t1 to reach the first via point. In this case, the user may set a time section before the first via point by the first time t1.

In some cases, the robot may maintain a state of being disposed at the second via point corresponding to a last position where the previous capturing task is finished other than the initial position p0.

In this case, when the robot obtains a command to pass through the first via point through the control unit or the simulation unit, the robot should perform both a return operation of returning to the initial position p0 from the second via point within the first time t1, and a first operation of moving from the initial position to the first via point. In order to achieve the corresponding purpose, the robot may move at an unreasonable speed. Even when the corresponding purpose is achieved by speeding, a time at which the first operation is performed is reduced, so that a problem may occur in which the capturing speed initially intended by the user is changed. Such a problem may be caused by the fact that the process in which the robot returns to the initial position p0 is omitted from the timeline menu dm.

In order to solve the corresponding problem, when the first via point (first via point) passing just after the initial position p0 is set, the pattern unit 130 may further add an additional time to the movement time t1 from the initial position p0 to the first via point.

The additional time may include a maximum time th that the camera deviating from the initial position p0 is required to return to the initial position by the robot within the robot's speed limit.

As a result, when the user gives the first time t1, the pattern unit 130 may automatically add the additional time th to the first time t1.

In this case, even when the user sets the first via point at the position where the first time t1 has elapsed from the initial position P0, the first via point may be moved to the position where the additional time th is automatically additionally added by the pattern part 139.

However, in this case, there is a possibility that an unnecessary attempt for the user to readjust the automatically changed first via point to his/her desired state may be caused.

In other words, even though the user sets the first via point at the interval of the first time t1, the user may recognize the first via point as a state in which the first via point is moved to the point where the additional time th is added to the first time t1 by the pattern part 139. The user who does not recognize that the action is taken according to the return time may attempt to meet the first via point disposed at a t1+th position at the first time set by the user.

In order to prevent this unnecessary attempt, the pattern part 139 may leave the display position of the first via point at the position where the first time t1 set by the user has elapsed as it is, even though the additional time th is added.

In summary, the position of the first via point displayed on the display may be set to a point where the set time tj has elapsed from the initial position p0.

The set time tj may be a state in which the additional time th is added to the first time t1 set by the user from the standpoint of the robot. However, the set time tj may be visually displayed at the same position as that of the first time t1 set by the user.

In this case, the position of the first via point may be displayed to be the same as the position set by the user. However, internally, the position on the time axis of the first via point may be processed at a time in which the second time t1 and the additional time th are added. The user may expect the capturing pattern of the camera or robot starting from the initial position P0. However, when the process in which the camera or the robot returns to the initial position from another position is added, it may be difficult for the user to identify which position is the initial position p0. In order to notify the user of the fact that the initial position has been reached, the pattern unit may control the robot or the projection body so that the robot is stopped at the initial position p0 for a notification time, for example, 2 seconds, when the robot reaches the initial position p0 through the return operation, and then moves toward the first via point.

Alternatively, the pattern unit does not display the first image through the first menu while the return process is executed, and may display the first image through the first menu when the robot reaches the initial position p0 through the return process. When the first image is not displayed despite the movement of the robot, the user may confirm that the return operation is being performed. Thereafter, when the first image is displayed again through the first menu, the user may recognize the fact that the robot has reached the initial position p0.

Meanwhile, a lighting means for providing light necessary for capturing the subject, that is, illuminating the subject, may be additionally provided.

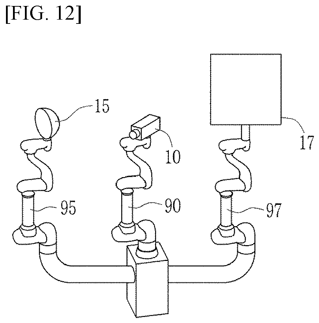

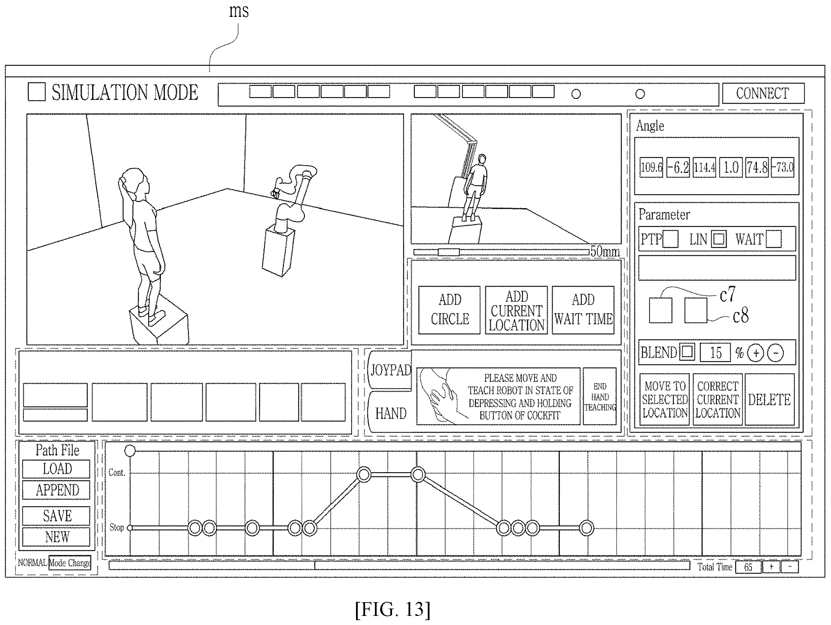

FIG. 12 is a schematic view showing another robot controlled by the capturing apparatus according to the present disclosure. FIG. 13 is a schematic view showing a lighting menu and a reflector menu.

The lighting means may include a lighting lamp such as a lamp configured to project light, and a lighting robot configured to move the lighting lamp. A projection lighting body 95 in which the lighting robot is projected in the virtual space, and a projection lighting lamp 15 in which the lighting lamp is projected in the virtual space may be displayed on the second menu.

The lighting means may include a reflector configured to reflect the light projected from the lighting lamp, and a reflective robot configured to move the reflector. A projection reflection body 97 in which the reflective robot is projected in the virtual space, and a projection reflector 17 in which the reflector is projected in the virtual space may be displayed on the second menu.

The pattern unit 130 may additionally control at least one of the lighting robot configured to project light required for capturing the subject and the reflective robot configured to reflect light projected from the lighting robot in conjunction with the capturing robot equipped with the camera.

As an example, an optical axis of the lighting lamp provided in the lighting robot and an optical axis of the camera may be initially set to a first angle. At this time, when the camera moves, the pattern part 139 of the pattern unit 130 may automatically move the lighting robot so that the lighting lamp maintains the first angle with the camera. Likewise, a virtual line orthogonal to the reflector provided in the reflective robot and the optical axis of the camera may be initially set to a second angle. At this time, when the camera moves, the pattern part 139 may automatically move the reflective robot so that the reflector maintains the second angle with the camera.

FIG. 12 shows a robot in which the projection body 90, the projection lighting body 95, and the projection reflection body 97 in which the capturing robot equipped with the camera is projected in the virtual space are integrally formed. This may mean that the capturing robot, the lighting robot, and the reflective robot are integrally formed.

Alternatively, the projection body 90, the projection lighting body 95, and the projection reflection body 97 may also be provided separately. This may mean that the capturing robot, the lighting robot, and the reflective robot are separately formed.

The pattern part provided in the pattern unit may set the via point displayed on the display.

The via point set by the pattern part may include at least one of the coordinate of the via point through which the camera or the capturing robot should pass, the orientation direction information of the camera, the view angle information of the camera, and the arrangement order information of the via points. In addition, the via point set by the pattern part may include at least one of coordinate information of the lighting lamp, orientation direction information of the lighting lamp, and an illuminance of the lighting lamp. In addition, the via point set by the pattern part may include at least one of coordinate information of the reflector and an arrangement angle of the reflector.

The pattern part may display the camera operation menu am for adjusting the orientation direction or view angle of the camera, and the via point setting menu bm for setting a point (coordinate) through which the camera passes on the display. In the state in which the specific via point is selected, the orientation direction, view angle, and coordinate through which the camera passes of the camera set through the camera operation menu am and the via point setting menu bm may be included in the information of the corresponding specific via point.

The pattern part may display a lighting lamp menu c7 for setting at least one of the coordinate information of the lighting lamp, the orientation direction information of the lighting lamp, and the illuminance of the lighting lamp on the display.

The user may set the coordinate information of the lighting lamp, the orientation direction information of the lighting lamp, and the illuminance of the lighting lamp using the lighting lamp menu c7. In the state in which the specific via point is selected, the coordinate information of the lighting lamp, the orientation direction information of the lighting lamp, and the illuminance of the lighting lamp set through the lighting lamp menu c7 may be included in the information of the specific via point.

The pattern part may display a reflector menu c8 for setting at least one of the coordinate information of the reflector and the arrangement angle of the reflector on the display.

The user may set the coordinate information of the reflector and the arrangement angle of the reflector using the reflector menu c8. In the state in which the specific via point is selected, the coordinate information of the reflector and the arrangement angle of the reflector set through the reflector menu c8 may be included in the information of the specific via point.

Meanwhile, the capturing robot may be provided with an illuminance sensor configured to measure ambient brightness.

When the robot capturing mode is selected from the initial selection menu, the pattern part may obtain a measurement value of the illuminance sensor.

When the measurement value of the illuminance sensor is a set illuminance or less, the pattern part may turn on the lighting lamp and move the lighting robot to a preset position. The coordinate information of the lighting lamp, the orientation direction information of the lighting lamp, the illuminance of the lighting lamp, the coordinate information of the reflector, and the arrangement angle of the reflector may be included in the capturing pattern along with the coordinate of the via point, the orientation direction of the camera, the view angle of the camera, and the arrangement order of the via point.

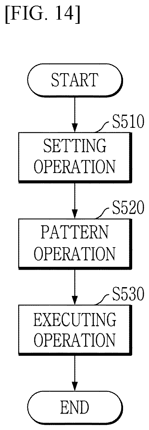

FIG. 14 is a flowchart showing the capturing method according to the present disclosure.

The capturing method shown in FIG. 14 may be performed by the capturing apparatus shown in FIG. 1 or 2.

The capturing method may include a setting operation (S510), a pattern operation (S520), and an executing operation (S530).

The setting operation (S510) may set at least one of the type of the robot that moves the camera, the communication connection address of the robot, the type of the subject 80 corresponding to the capturing target, the type of the camera, the position of the robot, the position of the camera, the position of the subject 80, the distance between the camera and the subject 80, and the view angle of the camera. The setting operation (S510) may be performed by the setting unit 110.

The pattern operation (S520) may set the capturing pattern of the camera installed in the moving robot. The pattern operation (S520) may be performed by the pattern unit 130.

The executing operation (S530) may move the robot according to the capturing pattern or simulate the movement of the robot according to the capturing pattern. The executing operation (S530) may be performed by the control unit or the simulation unit.

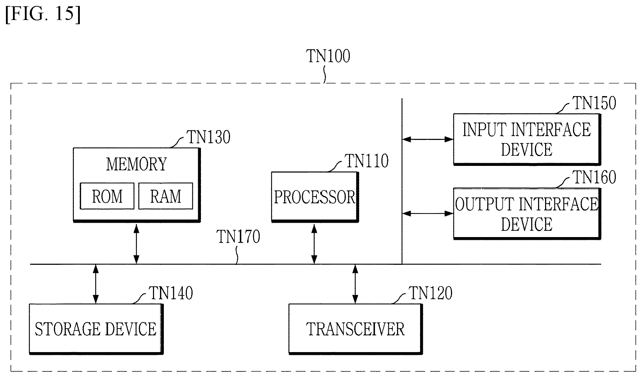

FIG. 15 is a view showing a computing apparatus according to an embodiment of the present disclosure. A computing apparatus TN100 in FIG. 15 may be the apparatus (e.g., the capturing apparatus) described herein.

In the embodiment of FIG. 15, the computing apparatus TN100 may include at least one processor TN110, a transceiver TN120, and a memory TN130. In addition, the computing apparatus TN100 may further include a storage device TN140, an input interface device TN150, and an output interface device TN160. Components included in the computing apparatus TN100 may be connected by a bus TN170 to communicate with each other.

The processor TN110 may execute a program command stored in at least one of the memory TN130 and the storage device TN140. The processor TN110 may mean a central processing unit (CPU), a graphics processing unit (GPU), or a dedicated processor in which the methods according to the embodiments of the present disclosure are performed. The processor TN110 may be configured to implement procedures, functions, and methods described in connection with the embodiments of the present disclosure. The processor TN110 may control each component of the computing apparatus TN100.

Each of the memory TN130 and the storage device TN140 may store various information related to the operation of the processor TN110. Each of the memory TN130 and the storage device TN140 may be configured as at least one of a volatile storage medium and a nonvolatile storage medium. For example, the memory TN130 may be configured as at least one of a read only memory (ROM) and a random access memory (RAM).

The transceiver TN120 may transmit or receive a wired signal or a wireless signal. The transceiver TN120 may be connected to a network to perform communication.

Meanwhile, the embodiments of the present disclosure are not implemented only through the apparatus and/or method described so far, and may also be implemented through the program that implements the functions corresponding to the configuration of the embodiments of the present disclosure or the recording medium in which the program is recorded, and this implementation may be easily made by those skilled in the art to which the present disclosure pertains from the above-described description of the embodiments.

While the embodiments of the present disclosure have been described above in detail, the scope of the present disclosure is not limited thereto, and various modified and improved forms of those skilled in the art using the basic concept of the present disclosure defined in the appended claims also belong to the scope of the present disclosure.

## Claims

1. A capturing apparatus comprising:
a setting unit configured to set environment information of a robot equipped with a camera; and
a pattern unit configured to set a capturing pattern of the robot based on the environment information.

2. The capturing apparatus of claim 1,
wherein the pattern unit is provided with a generation part, an arrangement part, and a first display part, and
wherein the generation part generates a virtual stage,
the arrangement part disposes a projection capturing means on which the camera is projected on the virtual stage,
the arrangement part disposes a virtual subject on the virtual stage according to the environment information,
the first display part displays a first menu on a display, and
a first image in which the virtual stage or the subject is captured by the projection capturing means is displayed on the first menu.

3. The capturing apparatus of claim 1,
wherein the pattern unit is provided with a generation part, an arrangement part, and a second display part, and
wherein the generation part generates a virtual stage and a virtual auxiliary capturing means that is distinguished from a projection capturing means on which the camera is projected,
the arrangement part disposes a projection body on which the robot is projected on the virtual stage,
the arrangement part disposes a virtual subject on the virtual stage according to the environment information,
the arrangement part disposes the auxiliary capturing means at a position spaced apart from the projection capturing means, the projection body, and the subject,
the second display part displays a second menu on a display, and
a second image in which at least one of the virtual stage, the subject, the projection body, and the projection capturing means is captured by the auxiliary capturing means is displayed on the second menu.

4. The capturing apparatus of claim 1,
wherein the pattern unit displays on a display a third menu in which a setting menu of the capturing pattern is displayed,
wherein the setting menu includes at least one of a camera operation menu, a via point setting menu, a movement setting menu, a timeline menu, a reproduction menu, and a file management menu, and
wherein the camera operation menu includes a menu for adjusting an orientation direction or a view angle of the camera,
the via point setting menu includes a menu for setting a point through which the camera passes,
the movement setting menu includes a menu for setting a method in which the camera moves in a section between a plurality of via points,
the timeline menu includes a menu in which each via point is arranged over time,
the reproduction menu includes a menu that moves the robot according to the timeline menu or moves a projection body of the robot projected in a virtual space, and
the file management menu includes a menu for storing or loading at least one of the orientation direction, view angle, via point, and arrangement order of the via point of the camera set through the camera operation menu, the via point setting menu, the movement setting menu, and the timeline menu.

5. The capturing apparatus of claim 4,
wherein the pattern unit is provided with a first display part configured to display a first menu on the display and a second display part configured to display a second menu on the display, and
wherein an image captured by the camera moving with the robot is displayed or an image captured by a projection capturing means of the camera moving with the projection body is displayed on the first menu when the robot or the projection body is moved by the reproduction menu, and
an appearance of the robot or the projection body moved by the reproduction menu is displayed on the second menu.

6. The capturing apparatus of claim 1,
wherein the pattern unit is provided with a pattern part configured to generate a via point setting menu, and
wherein the via point setting menu sets a point through which the camera passes, and
the pattern part provides a manual menu for allowing a user to teach the via point while holding and moving the robot by hand or a numerical menu for teaching the via point while numerically operating the movement of each joint forming the robot to a display.

7. The capturing apparatus of claim 1,
wherein the pattern unit is provided with a pattern part configured to generate a timeline menu in which a via point of the robot is arranged over time, and
in the timeline menu, a horizontal axis is a time axis, and a vertical axis is a via method axis, and
wherein the pattern part forms the specific via point so that the specific via point displayed on the timeline menu is movable along the via method axis by a user's operation, and
wherein the via method axis includes a first method or a second method,
the first method represents a method in which once the robot reaches the specific via point and then moves from the specific via point toward another via point, and
the second method represents a method in which the robot moving toward the specific via point changes the movement direction toward another via point before reaching the specific via point.

8. The capturing apparatus of claim 1,
wherein the pattern unit is provided with a pattern part configured to generate a blending menu for setting a via method of the robot for a specific via point, and
wherein the pattern part sets a blending path when the blending menu is selected,
the blending path includes a movement path in which the robot, which moves from a previous via point toward the specific via point, changes a direction toward a next via point before reaching the specific via point, and
when a first virtual line connecting the previous via point and the specific via point, and a second virtual point connecting the specific via point and the next via point are defined,
the pattern part sets the blending path along an arc of a virtual circle that comes into contact with the first virtual line and the second virtual line at the same time.

9. The capturing apparatus of claim 8,
wherein the pattern part sets the radius of the virtual circle with respect to a shorter virtual line of the first virtual line and the second virtual line, and
the pattern part forms the virtual circle within a section from the specific via point to a half position of the shorter virtual line.

10. The capturing apparatus of claim 1,
wherein the pattern unit is provided with a pattern part configured to generate a circle generation menu, and
wherein the circle generation menu includes a menu for setting a movement path of the robot moving along a virtual capturing circle formed around a subject corresponding to a capturing target,
the pattern part generates a first additional point and a second additional point after the specific via point when the circle generation menu after the specific via point is selected,
the pattern part additionally provides a menu for changing at least one position of the specific via point, the first additional point, and the second additional point,
the pattern part forms the capturing circle to pass through all of the specific via point, the first additional point, and the second additional point, and
the pattern part sets a movement path of an arc shape that sequentially passes through the specific via point, the first additional point, and the second additional point of the capturing circle.

11. The capturing apparatus of claim 1,
wherein the pattern unit further gives an additional time to a movement time from the initial position to the initial via point when an initial via point passing through just after an initial position is set, and
the additional time includes a maximum time at which the camera deviating from the initial position is required to return to the initial position by the robot within a robot's speed limit.

12. The capturing apparatus of claim 1,
wherein when a lighting robot configured to project light required for capturing a subject, and a reflective robot configured to reflect light projected from the lighting robot are provided,
the pattern unit additionally controls at least one of the lighting robot and the reflective robot in conjunction with a capturing robot equipped with the camera.

13. The capturing apparatus of claim 1,
wherein when a lighting means configured to provide light required for capturing a subject is provided, the lighting means includes a lighting lamp configured to project light, and a lighting robot configured to move the lighting lamp, and the lighting means includes a reflector configured to reflect the light projected from the lighting lamp, and a reflective robot configured to move the reflector,
the pattern unit displays a second menu on a display,
wherein a projection lighting body in which the lighting robot is projected in a virtual space, and a projection lighting lamp in which the lighting lamp is projected in the virtual space are displayed on the second menu by the pattern unit,
a projection reflection body in which the reflective robot is projected in the virtual space, and a projection reflector in which the reflector is projected in the virtual space are displayed on the second menu by the pattern unit,
the pattern unit is provided with a pattern part configured to set a via point displayed on the display, and
wherein the via point set by the pattern part includes at least one of a coordinate of the via point through which the capturing robot equipped with the camera or the camera is required to pass, orientation direction information of the camera, view angle information of the camera, and arrangement order information of the via point,
the via point set by the pattern part includes at least one of coordinate information of the lighting lamp, orientation direction information of the lighting lamp, and an illuminance of the lighting lamp,
the via point set by the pattern part includes at least one of coordinate information of the reflector, and an arrangement angle of the reflector,
the pattern part displays a camera operation menu for adjusting the orientation direction or view angle of the camera, and a via point setting menu for setting a coordinate through which the camera passes on the display,
in a state in which a specific via point is selected, at least one of the orientation direction, view angle, and coordinate through which the camera passes of the camera set through the camera operation menu and the via point setting menu is included in information of the corresponding specific via point,
the pattern part displays a lighting lamp menu for setting at least one of the coordinate information of the lighting lamp, the orientation direction information of the lighting lamp, and the illuminance of the lighting lamp on the display,
in the state in which the specific via point is selected, the coordinate information of the lighting lamp, the orientation direction information of the lighting lamp, and the illuminance of the lighting lamp set through the lighting lamp menu is included in the information of the corresponding specific via point,
the pattern part displays a reflective menu for setting at least one of the coordinate information of the reflector and the arrangement angle of the reflector on the display, and
in the state in which the specific via point is selected, the coordinate information of the reflector and the arrangement angle of the reflector set through the reflector menu are included in the information of the corresponding specific via point.

14. The capturing apparatus of claim 1,
wherein the capturing robot is provided with an illuminance sensor configured to measure ambient brightness,
the pattern unit is provided with a pattern part configured to obtain a measurement value of the illuminance sensor, and
the pattern part turns on a pre-provided lighting lamp and moves the lighting lamp to a preset position using a pre-provided lighting robot when the measurement value of the illuminance sensor is a set illuminance or less.

15. A capturing method performed by a capturing apparatus, the method comprising:
a setting operation of setting at least one of a type of a robot moving a camera, a communication connection address of the robot, a type of a subject corresponding to a capturing target, a type of the camera, a position of the robot, a position of the camera, a position of the subject, a distance between the camera and the subject, and a view angle of the camera;
a pattern operation of setting a capturing pattern of the camera installed on the moving robot; and
an execution operation of moving the robot according to the capturing pattern or simulating the movement of the robot according to the capturing pattern.
